# EUROPEAN PATENT APPLICATION

(11) **EP 3 410 732 A1**
(43) Date of publication of application: **05.12.2018**
(21) Application number: 17173496.5
(22) Date of filing: 30.05.2017
(51) Int. Cl.: H04N 21/442, H04N 21/466, H04N 21/45

(54) **A SYSTEM AND A METHOD FOR MONITORING ACTIVITY OF A USER DURING CONTENT PRESENTATION**

(71) Applicant: Advanced Digital Broadcast S.A., 1262 Eysins (CH)
(72) Inventor: Wowro, Grzegorz, 65-119 Zielona Gora (PL); Sokolnicki, Mateusz, 65-119 Zielona Gora (PL)
(74) Representative: Kancelaria Eupatent.pl Sp. z.o.o

(57) **Abstract**

A computer-implemented method for monitoring user activity during content presentation at a content presentation device having an input interface for receiving input from the user, the method comprising performing the following steps at the content presentation device: obtaining (803) content to be presented to the user; monitoring (804) user's actions input via the input interface while presenting the content to the user; calculating (806) a user satisfaction rating; storing (807) the user satisfaction rating in a memory of the user device; characterized by: when monitoring (804) user's actions, determining (805) volume level changes and navigation commands input by the user; and calculating (806) the user satisfaction rating value (R) as a function of a volume level rating (R_VL) having a value dependent on determined volume level changes and predefined volume level patterns and a navigation commands rating (R_NC) having a value dependent on determined navigation commands and predefined content navigation patterns.

## Description

### TECHNICAL FIELD

The present disclosure relates to monitoring activity of a user during content presentation, in particular audio or multimedia content.

### BACKGROUND

With the development of modern audio/video technologies, people can instantly access large amount of content at any given time from various sources. This requires a tool that can help users to rapidly find a content item in which the user can be interested, i.e. a personalized content recommendation system. At present, various kinds of content recommendation systems have already been applied to television, broadcast and Internet fields extensively. The design of content recommendation systems is focused on providing a best match between the available content and user needs. However, there is still a need to improve the way of choosing/determining the recommended content to be presented to particular user.

A well-known method of presenting available content is a grid-type electronic programme guide (EPG) or interactive program guide (IPG), which typically has a timeline along its X axis and lists available channels on a Y axis, wherein programmes available at a particular channel at a particular time are presented in cells within the grid. It is well-known to mark recommended content in the EPG grid for example by highlighting the cells with the recommended content. The recommended content is determined basing on previously watched (at least opened for watching) content or on the basis of a form fulfilled by the user.

There are typically two types of television recommenders: explicit and implicit.

Explicit television program recommenders explicitly question viewers about their preferences for content attributes, such as title, genre, actors, channel, and date/time to subsequently derive viewer profiles and generate recommendations.

An example of such an approach has been defined in EP1400111 - "Television program selection apparatus and method", where a user profile includes characteristics weights given by the user to the scheduled program characteristics of a plurality of scheduled television programs.

Implicit television program recommenders, on the other hand, generate television program recommendations based on information derived from the viewing history of the viewer, in a non-obtrusive manner. An implicit television program recommender processes the viewing history to derive an implicit viewer profile containing a set of inferred rules that characterize the preferences of the viewer.

An example of such an approach is disclosed in US Patent 7051352 "Adaptive TV program recommender", where a feature of viewer history data structure, including selected records from the EPG database, has been presented.

State of the art recommender systems rely on predicting the score that a user would assign to a content item and selecting for recommendation the items with the highest predicted recommendation scores. For example, top ten items.

There is a need to improve the way of determining the recommended content by implicit recommender systems, to match user's preferences in greater degree basing on automatic rating system rather than on information (describing user interests in particular content) manually provided by the user.

### SUMMARY

There is disclosed a computer-implemented method for monitoring user activity during content presentation at a content presentation device having an input interface for receiving input from the user, the method comprising performing the following steps at the content presentation device: obtaining content to be presented to the user; monitoring user's actions input via the input interface while presenting the content to the user; calculating a user satisfaction rating; storing the user satisfaction rating in a memory of the user device; wherein: when monitoring user's actions, determining volume level changes and navigation commands input by the user; and calculating the user satisfaction rating value (R) as a function of a volume level rating (R_VL) having a value dependent on determined volume level changes and predefined volume level patterns and a navigation commands rating (R_NC) having a value dependent on determined navigation commands and predefined content navigation patterns.

The user satisfaction rating value (R) can be a weighted sum of the volume level rating (R_VL) and the navigation commands rating (R_NC).

The value of the volume level rating (R_VL) can be changed upon detection of a volume change by a level higher than a predetermined value threshold for a time longer than a predetermined duration threshold.

The value of the navigation commands rating (R_NC) can be changed upon detection of a fast forward or rewind commands by a duration longer than a predefined duration threshold.

The method may comprise storing the volume level changes and navigation commands input by the user as temporary data and calculating the user satisfaction rating value (R) after the user has stopped watching the content.

The method may further comprise storing the user satisfaction rating value (R) in a memory along with data of content comprising at least one of: a content name, a content genre, a duration of operation, a channel name.

There is also disclosed a non-transitory computer readable storage medium comprising instructions that, when executed by a computer, enable generating a video stream in accordance with the method as described above.

There is also presented a content presentation device comprising: a content presentation block configured to present content to a user; an input interface configured to receive volume level commands and content navigation commands from the user; a controller configured to: calculate a user satisfaction rating; store the user satisfaction rating in a memory of the user device; wherein the controller is further configured to: when monitoring user's actions, determine volume level changes and navigation commands input by the user via the input interface; calculate the user satisfaction rating value (R) as a function of a volume level rating (R_VL) having a value dependent on determined volume level changes and predefined volume level patterns and a navigation commands rating (R_NC) having a value dependent on determined navigation commands and predefined content navigation patterns.

### BRIEF DESCRIPTION OF DRAWINGS

The system and method presented herein are presented by means on example embodiments on a drawing, wherein:
Fig. 1 presents an overview of a general content distribution system.
Fig. 2 presents an overview of a content distribution system at a user's premises.
Fig. 3 presents a block diagram of a mobile device at which the user's actions monitoring system can be implemented.
Fig. 4 presents a block diagram of a set top box device at which the user's actions monitoring system can be implemented.
Fig. 5 presents data stored in user device memory.
Fig. 6 presents an example of a content of a data container 540.
Fig. 7 presents examples of information stored in data of content 640.
Fig. 8 presents in general a method for user's actions monitoring and satisfaction rating calculation.
Figs. 9A-9C present in details a method for user's actions monitoring and satisfaction rating calculation.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

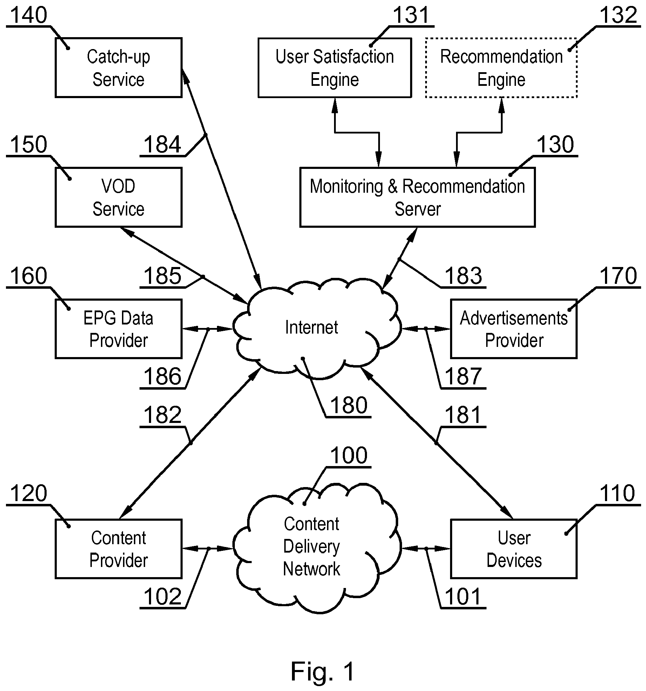

Fig. 1 presents an overview of a general content distribution system. Content can be provided to user devices 110 by various distributors from various sources. A content provider 120 may provide linear TV content, such as time-and-channel based television, live broadcasts etc., to a content delivery network 100, which may be broadcast, multicast or unicast. The user is connected with the content delivery network via a transmission channel 101, such as a QAM, Satellite, Terrestrial, IP multicast network or other type of network. Additional services are available to the user devices 110 linked via a transmission channel 181 with the Internet 180 (or through the content provider 120 connected via a transmission channel 182 with the Internet and via a transmission channel 102 with the content delivery network 110) and include at least some of the following.

A monitoring and recommendation server 130 is configured to provide, via a transmission channel 183, data about content recommended for a particular user or a particular user device, based on the statistics provided by the user satisfaction engine 131 which monitors the activity of a particular user or a particular user device. The data are generated by a recommendation engine 132 that operates any of the known methods for matching content with the user profile. The recommendations are used to organize the presentation of content at the user device accordingly.

A catch-up service 140 is configured to provide, via a transmission channel 184, retransmission of the content that has been already broadcast as linear TV, in order to allow the users to watch it a few hours or even days later.

A Video on Demand (VOD) service 150 is configured to provide, via a transmission channel 185, pre-recorded content on request.

An Electronic Program Guide (EPG) data provider 160 is configured to provide, via a transmission channel 186, additional data about content available from various sources, including the content available from the content delivery network 100 and the other content providers 140, 150.

An advertisement provider 170 is configured to provide, via a transmission channel 187, advertisements related to user preferences based on monitoring and recommendation server.

The transmission channels 181-187 may be of any known type, such as wired or wireless, using transmission technologies suitable to carry data of a particular service.

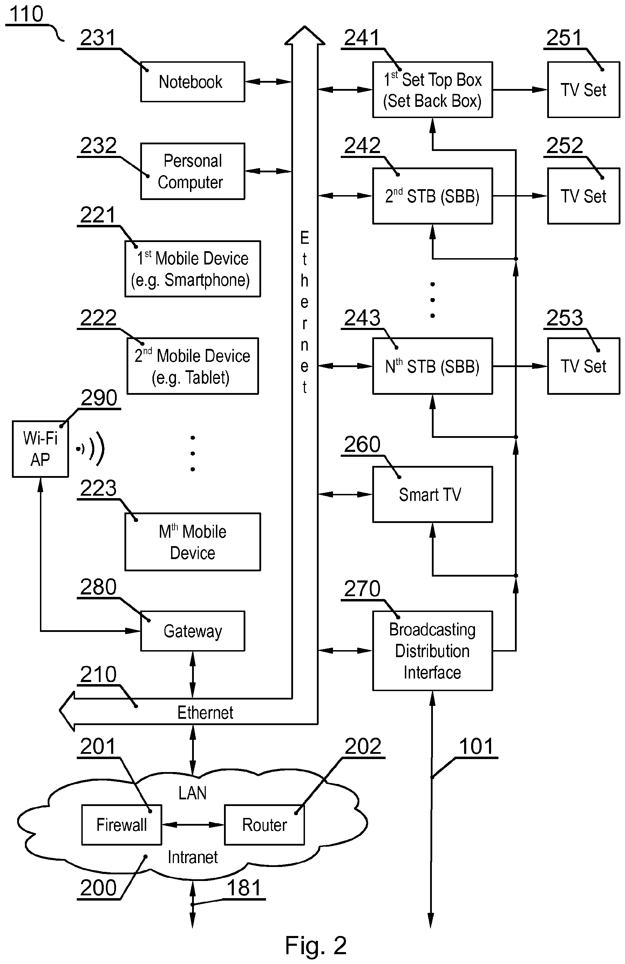

Fig. 2 presents an overview of a content distribution system at a user premises, such as at home or at an office. The user devices are connected to an Intranet - a local area network (LAN) 200 via an interface such as Ethernet (IP) 210, which is connected with the Internet 180 via the transmission channel 181. The LAN 200 preferably includes a firewall 201 and a router 202 configured to secure and coordinate data transmission. A gateway 280 may provide access to the Intranet 200 via a wireless access point (AP) 290, such as in Wi-Fi technology. A plurality of devices may be used in the user premises. Some of the devices may be mobile devices, such as a smartphone 221, a tablet 222 or another type of device 223. Other devices may be mobile or stationary and include devices such as a notebook computer 231, a personal computer 232, a Set Top Box (STB) or a Set Back Box (SBB) 241, 242, 243 connected to a television set 251, 252, 253, or a smart television set 260. A broadcasting distribution interface 270 may receive content from the content delivery network 100 via the transmission channel 101 and distribute it to the other devices via direct links or via the Ethernet interface.

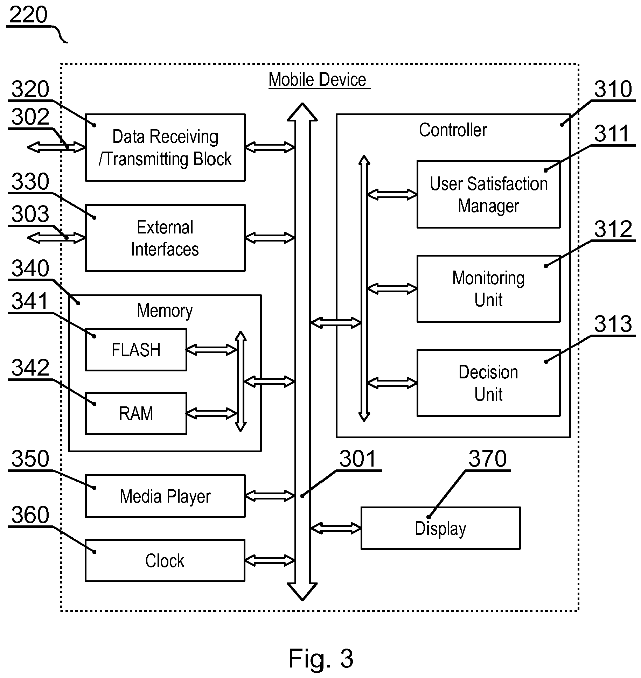

Fig. 3 presents a block diagram of a device 220, such as a tablet or smartphone, or a smart television, a notebook or a personal computer, at which the user's actions monitoring and recommendation system can be implemented, and wherein mainly the elements essential for operation of the system of the invention are shown.

A data receiving/transmitting block 320 is configured to communicate, via at least one transmission channel 302, with the Ethernet (IP) network 210 or the wireless network, in order to receive content and/or content recommendation data (advertisements), as well as to transmit user or device statistic data. The device may further comprise external interfaces 330 to communicate, via at least one communication channel 303, with other devices or accessories.

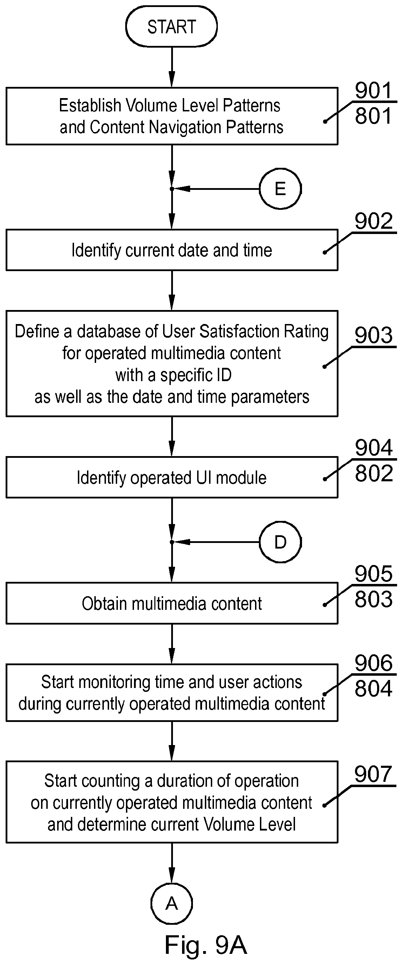

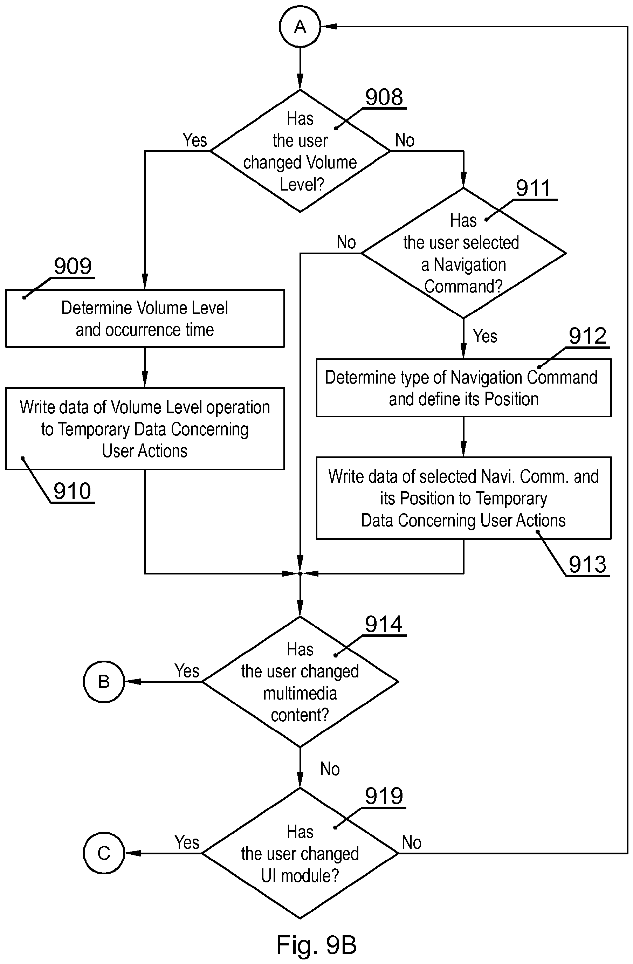

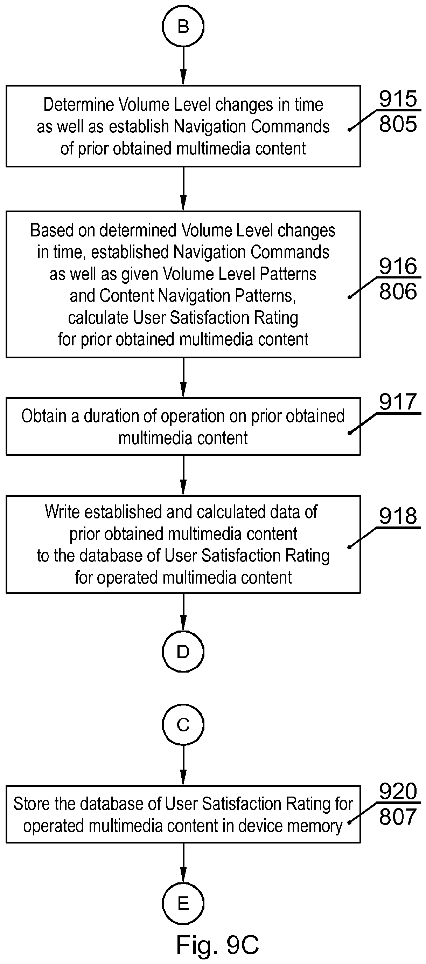

A controller 310 comprises a plurality of units configured to provide the functionality of the system as described herein in accordance with the method of Figs. 9A-9C.

A user satisfaction manager 311 is configured to communicate with the monitoring and recommendation server 130 to receive recommendation scores/ratings and to select the content items that meet predefined recommendation criteria to be presented as recommended content items basing on data received from a monitoring unit 312 and a decision unit 313.

The monitoring unit 312 is configured to monitor the activity of a particular user or a particular user device and to send information about the activity of the device or the user during viewing of the audio/video content.

The decision unit 313 is configured to determine if the activity of the user signifies user satisfaction or dissatisfaction with respect to currently viewed content.

The controller 310 operates utilizing memory blocks 340, including RAM 342 and Flash 341 blocks.

The units may be implemented as stand-alone or embedded hardware units or as software applications.

A clock module 360 is configured to provide timing data necessary to report, to the monitoring unit 312, the user or device activity for a particular time with respect to the viewed content.

A media player 350 is an example of a content presentation block that is configured to decode the received content and convert it to audio/video format suitable for presentation to the user.

The mobile device 220 typically includes its own display 370 for presenting content, typically a touch-type display which thereby also functions as an input controller.

All modules of the device communicate with each other via one or more internal data buses 301.

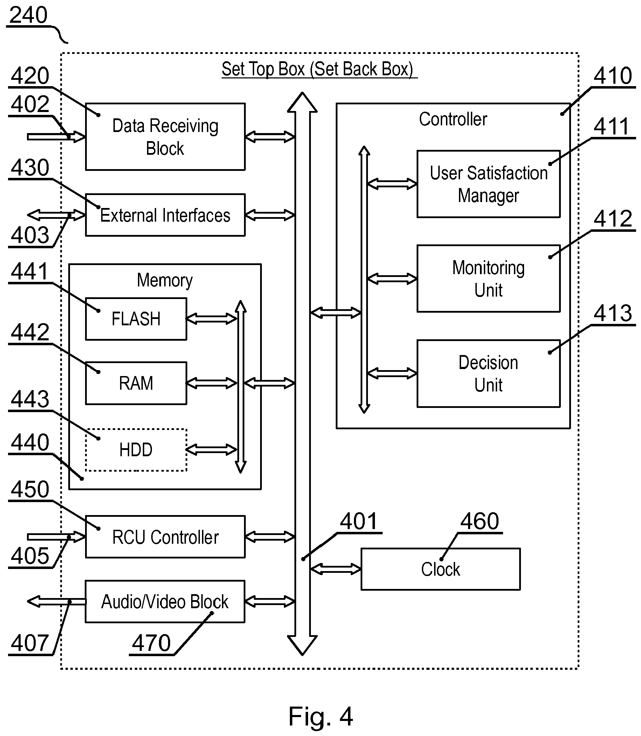

Fig. 4 presents a block diagram of a stationary device, such as a set top box or a set back box 240, at which the user's actions monitoring and recommendation system can be implemented, and wherein mainly the elements essential for operation of the system of the invention are shown.

The elements 401, 410, 440, 460 are equivalent to the elements 301, 310, 340, 360 described with reference to the mobile device 220 of Fig. 3.

In addition, the memory block 440 may further comprise a hard disk drive (HDD) 443 or another type of mass storage that can be used to store video or other data locally at the device, but is not essential for its operation.

A data receiving block 420 is configured to receive downstream data, such as video content, from the broadcasting distribution interface 270 via a channel 402 (101). The data receiving block 420 (also called a front-end block) may comprise a plurality of tuners (such as satellite, cable, terrestrial or IPTV tuners), wherein one of the tuners receives content to be displayed at the television screen to which the device is directly connected (e.g. the STB 241 connected to the TV set 251) and another tuner receives content to be recorded at the HDD 443.

External interfaces 430, such as the Ethernet interface, are configured to communicate, via at least one transmission channel 403, with the Ethernet (IP) network 210 or the wireless network, in order to receive applications and/or content recommendation data, as well as to transmit user or device statistic data.

The device is operable by the user via a remote control unit (RCU) that communicates, typically via a wireless transmission channel 405, with a RCU controller block 450.

An audio/video block 470 is an example of a content presentation block and configured to decode the received content, convert it to an audio/video format suitable for presentation to the user, and transmit the converted content via a transmission channel 407 to a TV set to which the device is directly connected.

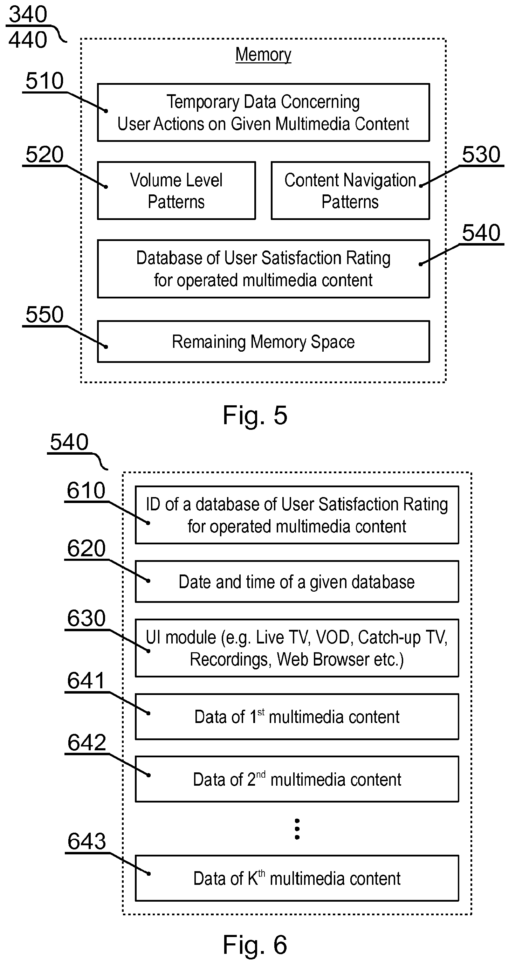

Fig. 5 presents data stored in user device memory 340, 440. Data is stored in containers, such as tables or other data types.

A data set comprises a particular configuration, specifying a plurality of parameter types defined in data containers 510-550. That configuration can be changed by the user of the device or remotely by a system operator.

The data container 510 stores temporary data concerning user's activity that was performed during presentation of the content, in particular volume adjustment and content navigation commands such as rewinding/fast-forwarding, pausing/resuming (which can be also referred to as trick modes).

The data container 520 stores volume level patterns which define volume adjustment actions signifying user's satisfaction or dissatisfaction with which the user actions concerning the volume adjustment are compared.

The data container 530 stores content navigation patterns signifying user's satisfaction or dissatisfaction with which the user's actions are compared.

Generally speaking the content navigation patterns may be associated to appropriate indicators (defining the level of user's satisfaction), for example concerning repeated rewinding operations and subsequent viewing of the rewinded fragments which would indicate that the user is interested in particular content therefore the user's satisfaction rating is high (the more rewinding operation the satisfaction rating is higher). In contrary, when the user makes fast forward operations, it may implicate that the user is not interested in the viewed content (or its fragments), therefore the user's satisfaction rating is low.

Similarly, in case of volume level adjustments made by the user, it may be concluded that the volume being significantly or completely decreased while the content viewing is not paused indicates user's dissatisfaction of the viewed content and therefore the user's satisfaction rating is low. Slight volume level adjustments (for example by one degree), may be interpreted, as the user is interested in the watched content and just wanted to adjust the volume level to the actual surrounding noise.

The data container 540 stores a database of user's satisfaction rating for operated content. The ratings are calculated basing on the comparison of user's actions with patterns stored in data containers 520, 530.

The remaining memory space 550 can be used for other purposes of the system.

Fig. 6 presents an example of a content of the data container 540. It can include a block with ID of a database of user's satisfaction rating for operated content 610, a date and time of a given database 620 creation or update, a UI (user interface) module type (e.g. Live TV, VOD, Catch-up TV, Recordings, Web Browser etc.) 630, a data of 1^{st} multimedia content 641, a data of 2^{nd} multimedia content 642, a data of K^{th} multimedia content 643.

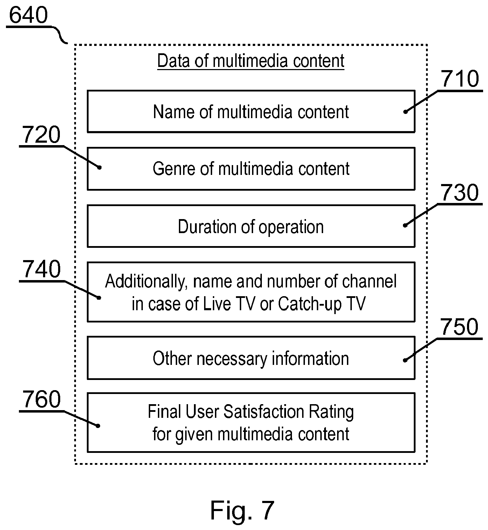

Fig. 7 presents examples of information stored in data of multimedia content 640. The data of the multimedia content 640 may contain a name of the multimedia content 710, a genre of the multimedia content 720, a duration of operation of the user during viewing of the multimedia content 730. It can additionally include a name and number of channel in case of Live TV or Catch-up TV 740, other information 750 such as content details related to the casting actors, director, filming date, duration etc. and a final user's satisfaction rating for given multimedia content 760.

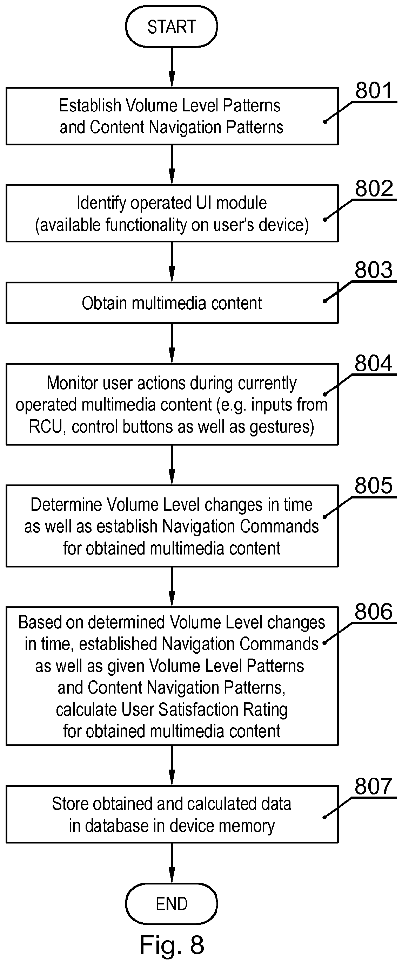

Fig. 8 presents in general a method for monitoring user activity during content presentation (i.e. while the user listens to audio or watches video or multimedia) and calculation of user's satisfaction rating. The procedure starts in step 801 by establishing content navigation patterns and volume level patterns. Next, in step 802 an operated UI module and available functionality on user device is identified. In step 803, a multimedia content is obtained. Next, in step 804 user's actions during presentation (i.e. playback of audio and/or display of video) of the content are monitored (e.g. inputs from RCU, control buttons as well as gestures). In step 805 volume level changes in time are determined as well as navigation commands for the presented multimedia content, as described in the example embodiment below. Next, in step 806 basing on the determined volume level changes in time, the input navigation commands as well as given volume level patterns and content navigation patterns, a user's satisfaction rating is calculated for the multimedia content. In last step 807 the calculated user satisfaction rating (and also preferably the obtained data) is stored in a database in device memory.

Figs. 9A-9C presents in details a method for user's actions monitoring and satisfaction rating calculation. The procedure starts in step 901 by establishing user's content navigation patterns and volume level patterns. Next, in step 902 the current time and date are determined. In step 903 a database of user's satisfaction rating for operated multimedia content with a specific ID as well as the date and time parameters are defined. In step 904 the operated UI module is identified and in step 905 the multimedia content is obtained. In step 906 the monitoring of the time and user's actions during currently operated multimedia content is started. Next in step 907 counting a duration of operation on currently operated multimedia content is started and current volume level is determined. In step 908 it is verified if the user changed the volume level. If yes, then in step 909 the volume level in particular time is determined and in step 910 the data concerning the volume level operation is written to temporary data concerning user's actions and the procedure continues to step 914. If the user didn't change the volume, then in step 911 it is checked if the user selected any content navigation command. If yes, then in step 912 the type of navigation command is determined and its position is defined. Next in step 913 data of selected navigation command and the position of the content at which the command was issued is written to temporary data concerning user actions, after which the procedure continues to step 914. If the user didn't select any navigation command in step 911 the procedure continues directly to step 914 in which it is determined if the user changed the multimedia content. If yes, the procedure jumps to step 915 in which volume level changes in time are determined as well as navigation commands of prior obtained multimedia content are established. Otherwise, in step 919 it is checked if the user changed the UI module. If no, the procedure loops back to step 908. If the user changed the UI module, the procedure jumps to step 920 in which the database of user's satisfaction rating for operated multimedia content is stored to the device memory. After step 920 the procedure loops back to step 902.

After step 915, in step 916 the user satisfaction rating for prior obtained multimedia content is calculated basing on determined volume level changes in time, navigation commands as well as given content navigation patterns and volume level patterns. Next in step 917 a duration of operation on prior obtained multimedia content is obtained. In step 918, the established and calculated data of prior obtained multimedia content is written to the database of user's satisfaction rating for operated multimedia content. Next the procedure loops back to step 905.

### Example embodiment - calculation of user's satisfaction rating.

The calculation of user's satisfaction rating can be based on comparison of the patterns of volume level and content navigation, obtained from the monitoring and recommendation server 130, with the observed tendency of volume level changes in time and navigation commands respectively. Basing on this comparison the specific rating can be calculated for volume level (R_VL) and navigation commands (R_NC). The final user's satisfaction rating may be a sum R=R_VL + R_NC or a "weighted" sum R= R_VL * W1+ R_NC *W2 wherein the specific ratings are multiplied by certain weight factor and summed up. For example, the weight for the rating related to the navigation commands may be higher than for the volume level.

For new (unwatched) Audio/Video content, the ratings R_VL and R_NC have initial values R_VLO and R_NCO, for example dependent on the chosen content type - the UI module (Recording, Live TV, Catch-up TV or VOD).

For example, the following volume level patterns can be defined:
- Increase of the volume level by 5% with respect to the initial or previous volume level (determined in step 907, Fig. 9A) that lasts for a time not shorter than 2 minutes results in current rating increase by 1: R_VL_current = R_VL_current + 1;
- Increase of the volume level by 5% with respect to the initial or previous volume level (determined in step 907, Fig. 9A) that lasts for a time not shorter than 10 minutes results in current rating increase by 5: R_VL_current = R_VL_current + 5;
- Increase of the volume level by 10% with respect to the initial or previous volume level (determined in step 907, Fig. 9A) that lasts for a time not shorter than 2 minutes results in current rating increase by 2: R_VL_current = R_VL_current + 2;
- Increase of the volume level by 10% with respect to the initial or previous volume level (determined in step 907, Fig. 9A) that lasts for a time not shorter than 10 minutes results in current rating increase by 10: R_VL_current = R_VL_current + 10;
- Maintaining the constant volume level during playback/viewing results in the rating being not changed;
- When the volume level is decreased, the rating can be also decreased by values equivalent to values for volume increase or by different values;

In general, the volume level patterns may define that the value of the volume level rating (R_VL) is changed upon detection of a volume change by a level higher than a predetermined value threshold for a time longer than a predetermined duration threshold.

Moreover, the following content navigation patterns can be defined:
- Pressing a pause/stop button, results in the rating being not changed;
- Pressing the pause/stop button and subsequent fast-forwarding until current time (currently watched/played content) in case of Live TV, results in current rating decrease by 5: R_NC_current = R_NC_current - 5;
- Pressing the pause/stop button and subsequent fast-forwarding by duration greater than 5 minutes, in case of UI modules other than Live TV, results in current rating decrease by 2: R_NC_current = R_NC_current - 2;
- Pressing the pause/stop button and subsequent fast-forwarding by duration greater than 10 minutes, in case of UI modules other than Live TV, results in current rating decrease by 4: R_NC_current = R_NC_current - 4;
- Rewinding the content by a duration of 5 minutes results in initial or current rating increase by 2: R_NC_current = R_NC_current + 2;
- Rewinding the content by a duration of 10 minutes results in initial or current rating increase by 4: R_NC_current = R_NC_current + 4;
- Subsequent fast-rewind operations with the same playback positions, results in current rating increase by 1: R_NC_current = R_NC_current + 1;
- If a duration of operation on prior obtained content (730) exceeds nominal time of content duration stored in the data base block 750, the final rating R_NC may be altered by additional value dependent on the relation between the indicated time parameters.

In general, the value of the navigation commands rating (R_VL) can be changed upon detection of a fast forward or rewind commands by a duration longer than a predefined duration threshold.

It can be easily recognized, by one skilled in the art, that the aforementioned method for presentation of content may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for monitoring user activity during content presentation at a content presentation device having an input interface for receiving input from the user, the method comprising performing the following steps at the content presentation device:
- obtaining (803) content to be presented to the user;
- monitoring (804) user's actions input via the input interface while presenting the content to the user;
- calculating (806) a user satisfaction rating;
- storing (807) the user satisfaction rating in a memory of the user device; **characterized by**:
- when monitoring (804) user's actions, determining (805) volume level changes and navigation commands input by the user; and
- calculating (806) the user satisfaction rating value (R) as a function of a volume level rating (R_VL) having a value dependent on determined volume level changes and predefined volume level patterns and a navigation commands rating (R_NC) having a value dependent on determined navigation commands and predefined content navigation patterns.

2. The method according to claim 1, wherein the user satisfaction rating value (R) is a weighted sum of the volume level rating (R_VL) and the navigation commands rating (R_NC).

3. The method according to any of previous claims, wherein the value of the volume level rating (R_VL) is changed upon detection of a volume change by a level higher than a predetermined value threshold for a time longer than a predetermined duration threshold.

4. The method according to any of previous claims, wherein the value of the navigation commands rating (R_NC) is changed upon detection of a fast forward or rewind commands by a duration longer than a predefined duration threshold.

5. The method according to any of previous claims, comprising storing the volume level changes and navigation commands input by the user as temporary data (910, 913) and calculating (916) the user satisfaction rating value (R) after the user has stopped watching the content (914).

6. The method according to claim 5, further comprising storing the user satisfaction rating value (R) in a memory (540) along with data of content (640) comprising at least one of: a content name (710), a content genre (720), a duration of operation (730), a channel name (740).

7. A non-transitory computer readable storage medium comprising instructions that, when executed by a computer, enable generating a video stream in accordance with the method according to any of claims 1-6.

8. A content presentation device (220, 240) comprising:
- a content presentation block (350, 470) configured to present content to a user;
- an input interface (370, 450) configured to receive volume level commands and content navigation commands from the user;
- a controller (310, 410) configured to:
- calculate (806) a user satisfaction rating;
- store (807) the user satisfaction rating in a memory of the user device;
**characterized in that** the controller is further configured to:
- when monitoring (804) user's actions, determine (805) volume level changes and navigation commands input by the user via the input interface; and
- calculate (806) the user satisfaction rating value (R) as a function of a volume level rating (R_VL) having a value dependent on determined volume level changes and predefined volume level patterns and a navigation commands rating (R_NC) having a value dependent on determined navigation commands and predefined content navigation patterns.
